(19) **Europäisches Patentamt / European Patent Office / Office européen des brevets**

(11) **EP 1 490 239 B1**

(12) **FASCICULE DE BREVET EUROPEEN**

(45) Date de publication et mention
de la délivrance du brevet:
**24.01.2007 Bulletin 2007/04**

(21) Numéro de dépôt: **03743332.3**

(22) Date de dépôt: **26.02.2003**

(51) Int Cl.:
***B60C 23/00*** *(2006.01)*     ***B60C 29/06*** *(2006.01)*

(86) Numéro de dépôt international:
**PCT/EP2003/001942**

(87) Numéro de publication internationale:
**WO 2003/074298 (12.09.2003 Gazette 2003/37)**

(54) **DISPOSITIF ET PROCEDE DE TRAITEMENT DES PHENOMENES DE PERTE DE PRESSION ET DE ROULAGE A PLAT DES PNEUMATIQUES D UN VEHICULE**

VORRICHTUNG UND VERFAHREN ZUM BEHANDELN DER PHÄNOMENE DES DRUCKVERLUSTS UND DES PANNENLAUFS BEI EINEM FAHRZEUGREIFEN

DEVICE AND METHOD FOR TREATING PRESSURE DROP AND RUNNING FLAT PHENOMENA ASSOCIATED WITH THE TYRES OF A VEHICLE

(84) Etats contractants désignés:
**AT BE BG CH CY CZ DE DK EE ES FI FR GB GR HU IE IT LI LU MC NL PT SE SI SK TR**

(30) Priorité: **01.03.2002 FR 0202669**

(43) Date de publication de la demande:
**29.12.2004 Bulletin 2004/53**

(73) Titulaires:
- **Société de Technologie Michelin**
  **63000 Clermont-Ferrand (FR)**
- **MICHELIN Recherche et Technique S.A.**
  **1763 Granges-Paccot (CH)**

(72) Inventeurs:
- **HOTTEBART, François**
  **JP-Tochigi-ken 326-0825 (JP)**
- **POMPIER, Jean-Pierre**
  **Greenville, SC 29607 (US)**

(74) Mandataire: **Dequire, Philippe Jean-Marie Denis**
**M.F.P. Michelin,**
**SGD/LG/PI-F35-Ladoux**
**63040 Clermont-Ferrand Cedex 09 (FR)**

(56) Documents cités:
**DE-A- 19 800 133**      **US-A- 5 516 379**

**EP 1 490 239 B1**

**Description**

La présente invention concerne le secteur technique des véhicules munis de pneumatiques et des systèmes de sécurité embarqués qui les concernent.

Par « véhicules » on entendra dans toute la présente demande, y compris les revendications, aussi bien les véhicules légers (VL), comme les véhicules particuliers ou de tourisme, que les véhicules utilitaires ou les véhicules lourds comme les camions et « poids lourds » (PL), leurs remorques, les véhicules forestiers, les engins de travaux publics, les véhicules militaires ou de secours, et analogues.

Le problème technique général qui est posé est celui dit des phénomènes de perte accidentelle de pression (PDP) qui peuvent conduire jusqu'au roulage à plat, pour des véhicules équipés de pneumatiques. Le phénomène de PDP et, dans une phase ultime, de roulage à plat désigne, comme le sait l'homme de métier, le roulage du véhicule sur au moins un pneumatique dont la pression de gonflage devient ou est devenue, pour quelque raison que ce soit, très inférieure à la pression prévue par le manufacturier, c'est-à-dire le cas de roulage où la pression de gonflage s'abaisse anormalement par rapport à la pression nominale d'emploi, dite pression de service, la pression de gonflage pouvant même devenir nulle.

Les causes de ces phénomènes sont très nombreuses : roulage sur un objet perforant, choc sur une forme de type « nid de poule » ou bordure de trottoir, dégradation de la valve, dégradation de la jante (jante cabossée avec perte d'étanchéité au niveau du siège), etc... , et sont bien connues.

Parmi les dispositifs de lutte contre ces problèmes de perte grave de pression et de roulage à plat et leurs conséquences, figurent notamment les dispositifs d'obturation de la crevaison et les pneumatiques avec capacité de roulage à plat sur appui.

Les dispositifs d'obturation de la crevaison sont basés sur des produits dits « produits obturants » dont la fonction est de colmater le trou à l'origine de la perforation du pneumatique. Pour être efficaces, ces produits obturants doivent être suffisamment adhérents à la surface interne du pneumatique et à l'objet responsable de la crevaison, si cet objet reste bloqué dans le pneumatique. Ils doivent aussi être capables de résister aux pressions de gonflage et aux contraintes subies en roulage. De tels produits sont usuellement relativement visqueux.

Le brevet US 5,295,525 présente un tel produit obturant destiné à être disposé, lors de la fabrication d'un pneumatique par exemple, à la surface de la cavité interne de celui-ci. Ces produits peuvent être efficaces pour des trous de taille limitée, mais cette efficacité diminue rapidement dans le temps et la présence de ces produits dans les pneumatiques complique fortement leur montage et leur démontage. En conséquence, la présence dans un pneumatique de tels revêtements obturants ne supprime pas complètement le risque pour un usager de devoir s'arrêter en cas de crevaison.

Le brevet US 5,648,406 présente un produit obturant destiné à n'être introduit dans la cavité interne d'un pneumatique qu'après une crevaison. Le produit obturant est alors usuellement contenu dans une bombe aérosol et est introduit dans la cavité interne à travers la valve de gonflage et appliqué contre la surface interne du pneumatique grâce à l'action d'un gaz comprimé présent dans la bombe aérosol. Par principe, ces bombes aérosol sont mises en oeuvre par l'usager. Elles ont l'avantage d'être moins chères, moins lourdes et moins volumineuses qu'une roue de secours, mais nécessitent l'arrêt du véhicule, ce qui représente un inconvénient extrêmement sérieux pour l'usager. De plus, ces bombes aérosol anti-crevaison ne sont pas efficaces dans tous les cas, notamment pas dans certains cas de crevaison rapide, c'est-à-dire dans les cas où une perforation importante s'est produite.

Plus récemment, des pneumatiques avec capacité de roulage à plat sont apparus sur le marché du véhicule automobile. La plupart de ces pneumatiques sont équipés d'un mesureur de pression destiné à informer l'usager qu'un, ou plusieurs, de ses pneumatiques ont subi ou subissent une PDP. La plupart de ces dispositifs mesurent également la température de l'air interne du pneumatique de façon à corriger la valeur de la pression des variations de valeur de la température, selon la loi des gaz parfaits.

Certains de ces pneumatiques ou ensembles montés, c'est-à-dire ensemble pneumatique et jante, comportent un « appui » disposé autour de la jante, dans la cavité interne du pneumatique. Parmi ce type d'ensemble monté avec capacité de roulage à plat, on citera le PAX System. Un tel appui est par exemple constitué en matériau caoutchouteux vulcanisé qui peut être renforcé par des armatures de câbles textiles ou métalliques.

En cas de pression anormalement faible, l'intérieur du sommet du pneumatique vient en contact avec cet appui. Ce faisant, l'appui limite la flèche du pneumatique à plat et permet de poursuivre le roulage dans des conditions de vitesse et de distance maximales données.

Toutefois, lors d'un tel roulage à plat, les contacts entre la paroi interne du sommet du pneumatique et la paroi externe de l'appui s'effectuent avec des glissements relatifs importants entre ces deux parois. Ces glissements relatifs sont dus à ce que la distance parcourue en un tour de roue par le sommet du pneumatique est supérieure à celle parcourue par l'extérieur de l'appui avec lequel il est en contact. On parle de différence de rayon de roulement. Pour limiter les efforts de frottement dus à ces glissements relatifs et leurs conséquences en termes d'échauffement et de dégradation mécanique, on peut utiliser un lubrifiant à l'intérieur de la cavité interne du pneumatique. Ce lubrifiant va réduire le coefficient de frottement entre l'intérieur du sommet du pneumatique et l'extérieur de l'appui et permettre aux deux corps de glisser l'un par rapport à l'autre en limitant la dégradation mécanique et l'échauffement. Le lubrifiant peut être disposé à la surface de l'appui lors de la fabrication de l'ensemble monté et/ou son assemblage, il peut aussi être placé dans des récipients adaptés pour ne s'ouvrir qu'en cas de nécessité (voir US 4,054,168, à titre d'exemple).

Les performances de ce lubrifiant sont importantes pour que le roulage à plat s'effectue dans de bonnes conditions. Dans de nombreux cas, comme la quantité de lubrifiant disposée à l'intérieur de la cavité interne du pneumatique est nécessairement limitée, si on pouvait augmenter la quantité de lubrifiant, on augmenterait l'autonomie de l'ensemble monté en roulage à plat. Il est à noter aussi que la présence de ce lubrifiant peut compliquer toute intervention de montage et de démontage de l'ensemble monté.

Le document WO 02/04237 présente une composition de lubrifiant utilisable pour lubrifier une interface entre un pneumatique et un appui de sécurité. Cette composition lubrifiante comprend essentiellement, d'une part, un agent lubrifiant incluant de la glycérine et, d'autre part, un polysaccharide destiné à épaissir cet agent lubrifiant.

Sur le marché sont apparus depuis quelques dizaines d'années des dispositifs de gonflage centralisés appelés « CTIS » (Central Tire Inflation System). Ces dispositifs permettent au conducteur d'un véhicule de modifier la pression de gonflage des pneumatiques de son véhicule en fonction notamment des conditions d'adhérence rencontrées (voir US 5,516,379 à titre d'exemple). Le document US 5,516,379 décrit un dispositif conforme au préambule de la revendication 1.

Ces dispositifs ont l'avantage de permettre un contrôle périodique de la pression de gonflage des pneumatiques du véhicule et ainsi de compléter la quantité d'air contenue dans l'un des pneumatiques lors d'une faible fuite par exemple.

L'invention concerne dans son concept le plus général, qui constitue en lui-même une rupture par rapport à l'art antérieur, un dispositif centralisé de traitement des phénomènes de perte de pression et de roulage à plat d'un pneumatique d'un véhicule, selon les caractéristiques de la revendication 1.

L'homme de métier sait naturellement que l'ensemble monté désigne l'ensemble formé par un pneumatique monté sur une jante et gonflé à une certaine pression, en général la pression dite « de service ».

L'invention propose un dispositif tel que décrit ci-dessus, qui est capable de traiter efficacement, sans arrêt du véhicule, et sans moyens ou aide extérieure, aussi bien les situations de perte de pression lentes (petites perforations) que rapides (perforations importantes), pour lesquelles on ne connaissait aucun système satisfaisant, avec une possibilité d'éviter le roulage à plat, ce qui est avantage très important, et également, lorsque le roulage à plat est inévitable, d'en réduire très fortement les inconvénients, sur des pneumatiques avec ou sans « appuis de sécurité ». L'ensemble de ces propriétés et capacités est rassemblé dans la présente demande, y compris dans les revendications, par un vocable tel que « traitement des phénomènes de perte de pression et de roulage à plat » ou vocable analogue.

Une telle combinaison de performance et d'avantages n'a jamais été réunie ni approchée dans l'art antérieur. On a également vu que, même lorsque l'art antérieur apportait des solutions très partielles, ponctuelles, et/ou temporaires, l'efficacité était réduite et s'accompagnait toujours d'inconvénients qui limitaient en pratique l'art antérieur à des solutions théoriques impraticables systèmes à réservoirs incorporés dans le pneumatique ou de très faible utilité, comme les bombes anti-crevaison.

Par rapport à cet art antérieur, l'homme de métier comprendra aisément que la présente invention forme une innovation de rupture.

Le ou les produit(s) actif(s) sont choisis dans le groupe des produits obturants et des produits lubrifiants.

Les moyens externes peuvent aussi comprendre des moyens aptes à injecter ou autrement amener un additif adapté, également externe à l'ensemble monté.

Les « additifs adaptés » sont choisis parmi tous les agents capables de, ou adaptés pour, améliorer les conditions d'injection des produits actifs, l'action de ces produits actifs, et les conditions de traitement de la perte de pression et éventuellement du roulage à plat.

En pratique, ces additifs adaptés seront choisis parmi les modificateurs de rhéologie des produits actifs, en particulier diluants et épaississants, les agents de nettoyage des conduits et tubulures du système qui sera décrit ci-après, des agents anti-corrosion, anti-oxydants et tous les agents capables d'atténuer ou de supprimer les conséquences physiques (élévation de température, etc...) et/ou mécaniques (affaissement, dégradation de l'enveloppe, etc...) bien connues d'un roulage à plat, avec ou sans appui.

On citera encore parmi ces additifs adaptés un agent capable de refroidir l'enveloppe comme par exemple un fluide refroidisseur aisément vaporisable comme un alcool ou de l'eau, un gaz ou de l'air comprimé, ou un gaz hydrocarboné non toxique et non dommageable pour l'environnement, éventuellement chargé d'un fluide dont la vaporisation ou la détente abaisse la température, comme de l'eau ou un alcool inférieur, un hydrocarbure léger, etc...

Selon l'invention, les moyens externes à l'ensemble monté comportent au moins un réservoir ou une source de produit actif destiné à être injecté ou autrement amené dans la cavité interne du pneumatique en cas de perte de pression ou de roulage à plat.

Les moyens externes peuvent aussi comprendre des moyens d'injection du produit actif dans la cavité interne du pneumatique.

Ces moyens d'injection peuvent comprendre la mise en oeuvre d'air ou autre gaz approprié, inerte, comme l'azote ou un hydrocarbure non toxique et non dommageable pour l'environnement, et non inflammable, à l'état comprimé.

Les moyens externes peuvent aussi comprendre une réserve ou source de produit refroidisseur destiné à être injecté ou autrement amené dans la cavité interne du pneumatique en cas de perte de pression ou de roulage à plat.

Ce produit refroidisseur peut être, de façon préférentielle, de l'air, de l'azote ou un gaz équivalent.

De façon préférentielle, les moyens externes comprennent ou coopèrent avec :

- des moyens de mesure de la pression ou d'autres caractéristiques représentatives de l'air interne du pneumatique, générant au moins un « signal représentatif » de l'état de l'air de gonflage dans la cavité interne du pneumatique, c'est-à-dire de la pression et/ou des variations de ladite pression dans le temps (ci-après « signal de pression ») ;
- des moyens de pilotage desdits moyens d'amenée ou d'injection comportant au moins une mémoire, un comparateur et un programme de pilotage, adaptés pour :

  • recevoir et traiter ledit signal de pression ;
  • le comparer à un référentiel de pression chargé dans ladite mémoire ; et
  • décider de, et programmer, en fonction du résultat de ladite comparaison, l'amenée ou l'injection dans le pneumatique d'air ou autre gaz comprimé et/ou de produit actif, selon des combinaisons variables de quantités, proportions et débits ou doses, adaptées pour répondre au mieux, en fonction dudit programme et de ladite mémoire, au signal de pression reçu.

De préférence, le référentiel de pression comporte des indications en valeur de pression, de différence de pression par rapport à une pression de référence, notamment la pression de service, et de vitesse de variation de la pression, c'est-à-dire $\dfrac{\Delta p}{\Delta t}$.

Les moyens de mesure des caractéristiques de l'air interne du pneumatique, générant le « signal de pression », peuvent se trouver sur ou dans l'ensemble monté. Ils peuvent aussi être extérieurs à l'ensemble monté.

De façon préférentielle, les moyens pour générer le « signal » de pression incorporent des moyens de mesure de la température de l'air de la cavité interne du pneumatique et de son évolution dans le temps.

Selon un mode de réalisation préféré, lesdits moyens pour injecter le produit actif et/ou fluide refroidisseur comprennent un générateur ou source d'air ou autre gaz comprimé et des conduits et leurs vannes ou robinets formant un circuit de liaison entre ledit générateur ou source, lesdits réservoirs et l'intérieur de la cavité interne dudit pneumatique.

Le générateur ou source d'air comprimé peut consister en un réservoir d'air comprimé comme l'air atmosphérique ou un gaz inerte comme l'azote, ou un hydrocarbure non toxique, non inflammable et non dommageable pour l'environnement. Il peut aussi consister en un compresseur.

Avantageusement, le compresseur fournissant l'air de gonflage est adapté pour fournir également l'air de refroidissement.

L'invention concerne, selon une variante préférée, un dispositif comprenant un système centralisé de gonflage d'au moins un pneumatique d'un véhicule ou CTIS constitué essentiellement de :

- une unité centrale de pilotage ;
- un compresseur produisant de l'air ou gaz comprimé ;
- un dispositif de régulation de la pression à une valeur fixe, ou pilotée par l'unité centrale ; et
- des moyens de connexion pneumatique entre ledit compresseur, ledit dispositif de régulation de la pression et la cavité interne dudit pneumatique ;

dans lequel ledit dispositif comporte en plus au moins un réservoir de produit actif relié par des conduits et robinets ou vannes audit éléments du CTIS et dans lequel l'unité centrale comporte une mémoire et un programme adaptés pour gérer et mettre en oeuvre des combinaisons variables de quantités, proportions et débits ou doses d'air de gonflage, de produit actif et/ou d'additif adapté, notamment de produit obturant et/ou lubrifiant et/ou d'additifs adaptés comme des agents de nettoyage, anti-corrosion, de l'air (ou un gaz) de refroidissement, ou un fluide de refroidissement comme de l'eau ou un alcool ou produits analogues.

On aura compris que, selon l'invention, l'air ou gaz comprimé (en tant que « produit actif ») remplit à la fois la fonction de véhicule ou de propulseur pour le ou les autres fluide(s), et d'agent luttant contre la déflation du pneumatique.

L'invention a aussi pour objet un procédé de traitement centralisé des phénomènes de perte de pression et de roulage à plat d'un pneumatique d'un véhicule, caractérisé en ce qu'il met en oeuvre :

- des moyens de mesure de la pression ou d'autres caractéristiques représentatives de l'air interne du pneumatique, générant au moins un « signal représentatif » de l'état de l'air de gonflage dans la cavité interne du pneumatique, c'est-à-dire de la pression et/ou des variations de ladite pression dans le temps (ci-après « signal de pression » ou « SP ») ;

- éventuellement des moyens de mesure de la température interne de l'air dans le pneumatique ;
- des moyens d'amenée ou d'injection dans la cavité interne d'un pneumatique d'air ou autre gaz comprimé et d'au moins un produit actif ;
- des moyens de pilotage desdits moyens d'amenée ou d'injection comportant au moins une mémoire, un comparateur et un programme de pilotage, adaptés pour :

  - recevoir et traiter ledit signal de pression ;
  - le comparer à un référentiel de pression (RP) chargé dans ladite mémoire ; et
  - ledit programme permettant de décider de, et programmer, en fonction du résultat de ladite comparaison, l'amenée ou l'injection dans le pneumatique d'air ou autre gaz comprimé, de produit actif et/ou d'additif adapté, selon des combinaisons variables de quantités, proportions et débits ou doses, adaptées pour répondre au mieux, en fonction dudit programme et de ladite mémoire, au signal de pression reçu.

Préférentiellement, le référentiel de pression (RP) comporte des indications en valeur de pression, de différence de pression par rapport à une pression de référence, notamment la pression de service, et de vitesse de variation de la pression, c'est-à-dire $\dfrac{\Delta p}{\Delta t}$.

Dans un mode de réalisation avantageux, lorsque le résultat de la comparaison entre ledit signal de pression (SP) et ledit référentiel de pression (RP) est anormal, les moyens de pilotage font envoyer par les moyens d'amener ou d'injection une dose prédéterminée de produit actif obturant dans la cavité interne dudit pneumatique.

Préférentiellement, les moyens de pilotage transmettent en plus une « alarme crevaison » au conducteur.

Selon le procédé de l'invention, le résultat de la comparaison entre ledit signal de pression (SP) et ledit référentiel de pression (RP) peut être considéré comme anormal lorsque l'écart entre la pression mesurée et la pression de consigne est supérieur à un seuil donné.

De façon alternative ou complémentaire, le résultat de la comparaison entre ledit signal de pression (SP) et ledit référentiel de pression (RP) peut être considéré comme anormal lorsque la variation de pression mesurée pendant un temps donné est supérieure à un seuil donné.

Dès qu'une telle crevaison est identifiée, le procédé selon l'invention fait envoyer dans la cavité interne du pneumatique une dose de produit obturant qui va permettre dans de très nombreux cas d'obturer la fuite et ainsi de poursuivre dans de bonnes conditions le roulage du véhicule.

En revanche, lorsque le résultat de la comparaison entre ledit signal de pression (SP) et ledit référentiel de pression (RP) indique des conditions de roulage à plat (RàP), les moyens de pilotage font envoyer par les moyens d'amener ou d'injection une dose prédéterminée de produit actif lubrifiant dans la cavité interne dudit pneumatique.

On peut considérer que des conditions de roulage à plat sont détectées lorsque la pression de gonflage dans la cavité interne du pneumatique devient inférieure à environ 0,3 bars. Cela veut dire que la stratégie de réparation précédente n'a pas été suffisamment efficace ou a échoué et il faut alors se préparer à limiter les effets du contact entre les flancs du pneumatique et les crochets de la jante de la roue, ou entre la bande de roulement du pneumatique et un appui de sécurité lorsque l'ensemble monté en est pourvu. C'est l'objectif du produit lubrifiant envoyé dans la cavité interne du pneumatique.

De préférence, les moyens de pilotage transmettent en plus une « alarme roulage à plat » au conducteur.

Il est alors préférable de prévoir que les moyens de pilotage font envoyer en plus par les moyens d'amener ou d'injection un faible débit d'air ou autre gaz de refroidissement dans la cavité interne dudit pneumatique.

Ce faible débit d'air a deux avantages très sensibles, le premier est de limiter l'échauffement dans la cavité interne et le second est de permettre de conserver une pression minimale dans la cavité interne, souvent de l'ordre de 0,1 bar au minimum, qui va alléger substantiellement les efforts de frottement et ainsi participer à la diminution de l'échauffement.

De préférence, le procédé selon l'invention prévoit alors que des moyens de mesure de la température de l'air dans la cavité interne du pneumatique transmettent ladite température aux moyens de pilotage et si, compte tenu des conditions d'usage (charge, vitesse, température extérieure...), lesdits moyens de pilotage constatent que cette valeur de température est supérieure à un seuil prédéterminé, alors lesdits moyens font envoyer une ou plusieurs doses supplémentaires de lubrifiant. Un tel premier seuil peut être de l'ordre de 80 degrés Celsius.

Mais, lorsque les moyens de pilotage constatent que la valeur de la température dans la cavité interne du pneumatique est supérieure à un second seuil prédéterminé, ils font transmettre au conducteur du véhicule une alarme demandant un arrêt immédiat. Un tel seuil est de l'ordre de 100 à 110 degrés Celsius.

Plusieurs modes de réalisation de l'invention sont maintenant décrits à l'aide du dessin annexé dans lequel :

- la figure 1 présente un schéma simplifié d'un premier dispositif de réalisation de l'invention ;
- la figure 2 présente, sous forme d'organigramme, un exemple de mise en oeuvre du procédé selon l'invention.
- la figure 3 présente une coupe axiale partielle d'un ensemble monté équipé d'un appui de sécurité ;
- la figure 4 présente un schéma simplifié d'un second dispositif de réalisation de l'invention ; et
- la figure 5 présente un schéma simplifié d'un troisième dispositif de réalisation de l'invention.

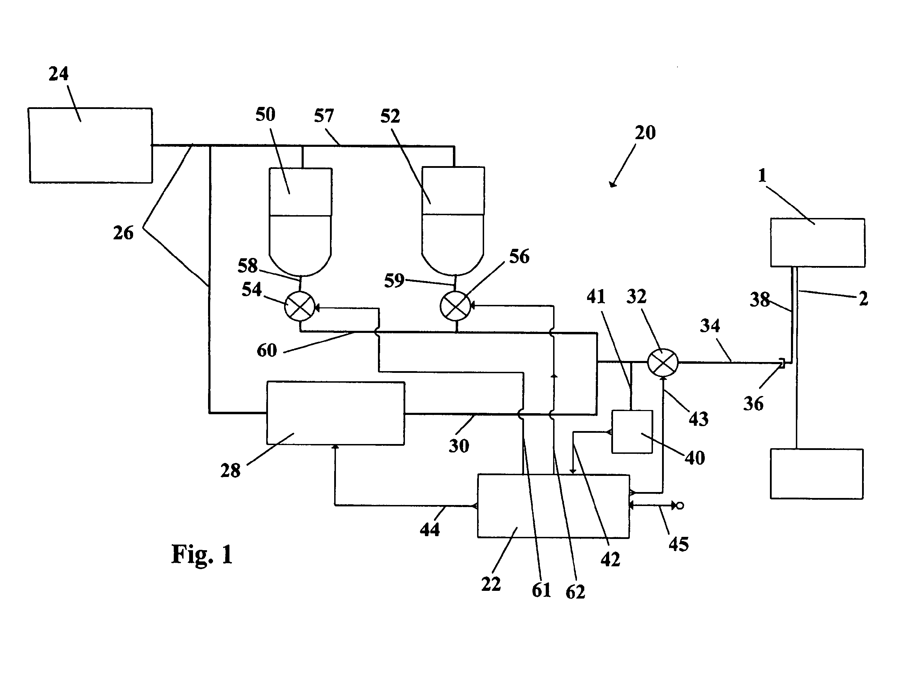

La figure 1 présente schématiquement un premier exemple de réalisation d'un dispositif centralisé selon l'invention. Ce dispositif comprend l'ensemble des éléments d'un dispositif de gonflage centralisé (CTIS) classique ainsi qu'un certain nombre d'éléments complémentaires spécifiques. Le dispositif de gonflage centralisé ou CTIS 20 comprend principalement les éléments suivants :

- une unité centrale de pilotage 22 ; cette unité centrale fonctionne usuellement avec un microprocesseur et reçoit des signaux de commande d'un tableau de commande (non représenté) à la disposition de l'opérateur du véhicule ainsi que de différents capteurs ;
- un compresseur 24 produisant de l'air comprimé ; ce compresseur fournit de l'air comprimé dans un conduit 26 à une pression usuelle de l'ordre de 6 bars ;
- le conduit 26 est relié à un dispositif de régulation de la pression 28 ; ce dispositif peut réguler la pression à une valeur fixe ou variable en fonction du pilotage de l'unité centrale 22 et des demandes de l'opérateur ;
- un conduit 30 placé en sortie du dispositif de régulation de la pression 28 ; dans ce conduit 30, la pression maximale est régulée par le dispositif 28 à une valeur donnée variable ;
- le conduit 30 est relié à un distributeur pneumatique composé d'un robinet ou vanne par roue du véhicule; dans le schéma de la figure 1, on n'a représenté qu'un robinet 32 gérant la distribution de l'air comprimé jusqu'à l'ensemble monté 1, 2 représenté ;
- en sortie du robinet 32, le conduit 34 permet de diriger l'air comprimé jusqu'à un joint tournant 36, ce joint tournant 36 permet de conduire l'air comprimé de l'axe de l'essieu statique (stator) vers le porte roue mobile en rotation (rotor) de l'ensemble monté 1, 2 représenté ;
- à la sortie du joint tournant 36 se trouve un conduit 38 reliant le joint tournant 36 à l'intérieur de la cavité interne de l'ensemble monté constitué par le pneumatique 1 et la roue 2 ; et
- un capteur de pression 40 permet de mesurer la pression de l'air dans le conduit 30, entre le dispositif de régulation de la pression 28 et le robinet 32, via le conduit 41.

Ce CTIS 20 comporte aussi usuellement des moyens pour mettre à l'air libre les conduits 30 et 34 lorsque le système n'est pas en opération ou lorsque l'on veut diminuer la pression de gonflage. Ces moyens comprennent usuellement une valve de roue disposée entre le joint tournant et la cavité interne du pneumatique pour permettre de ne pas laisser en permanence le joint tournant sous pression et ainsi augmenter sa durée de vie. Pour simplifier le dessin, cette valve n'est pas représentée.

L'unité centrale 22 est reliée électriquement au tableau de commande par le conducteur 45, au dispositif de régulation de la pression 28 par le conducteur 44, ainsi qu'au robinet 32 par le conducteur 43. L'unité centrale 22 reçoit aussi du capteur de pression 40 un signal électrique représentatif de la pression de l'air comprimé dans le conduit 30 via le conducteur 42.

Un tel dispositif CTIS permet de faire évoluer la pression dans la cavité interne du pneumatique jusqu'à une valeur donnée choisie par l'opérateur ou le programme de pilotage de l'unité centrale 22. Il permet aussi de contrôler périodiquement la valeur de la pression dans la cavité interne du pneumatique et de la corriger si nécessaire. Ces opérations sont effectuées en ouvrant le robinet 32 ce qui met en communication pneumatique la cavité interne du pneumatique 1, le conduit 30 et le capteur de pression 40. En fonction de la valeur de pression de gonflage mesurée, l'unité centrale choisit d'engager ou non une séquence de gonflage ou de dégonflage de la cavité interne du pneumatique.

Le dispositif selon l'invention comprend plusieurs éléments complémentaires du CTIS précédent :

- un premier réservoir 50 de produit actif, par exemple obturant ; ce réservoir est relié au compresseur 24 par le conduit 57, dérivation du conduit 26 ;
- en sortie du réservoir 50 un conduit 58 mène à un robinet 54, lui-même relié par un conduit 60 au conduit 30 de liaison entre le dispositif de régulation de pression 28 et l'ensemble des robinets 32 conduisant aux essieux et aux cavités internes des ensembles montés ;
- un second réservoir 52 de produit actif, par exemple lubrifiant ; ce second réservoir est aussi relié au compresseur 24 par le conduit 57, dérivation du conduit 26 ;
- en sortie du réservoir 52, un conduit 59 mène à un robinet 56, lui-même relié par le conduit 60 au conduit 30 ;

- les robinets 54 et 56 sont reliés et actionnés par l'unité centrale de pilotage 22 au moyen des conducteurs 61 et 62.

Il est à noter que les deux réservoirs de produits actifs, 50 et 52 sont reliés au compresseur 24, cela leur permet d'être en permanence pressurisés à la pression de sortie du compresseur soit de l'ordre de 6 bars.

En fonctionnement normal, les robinets 54 et 56 sont fermés.

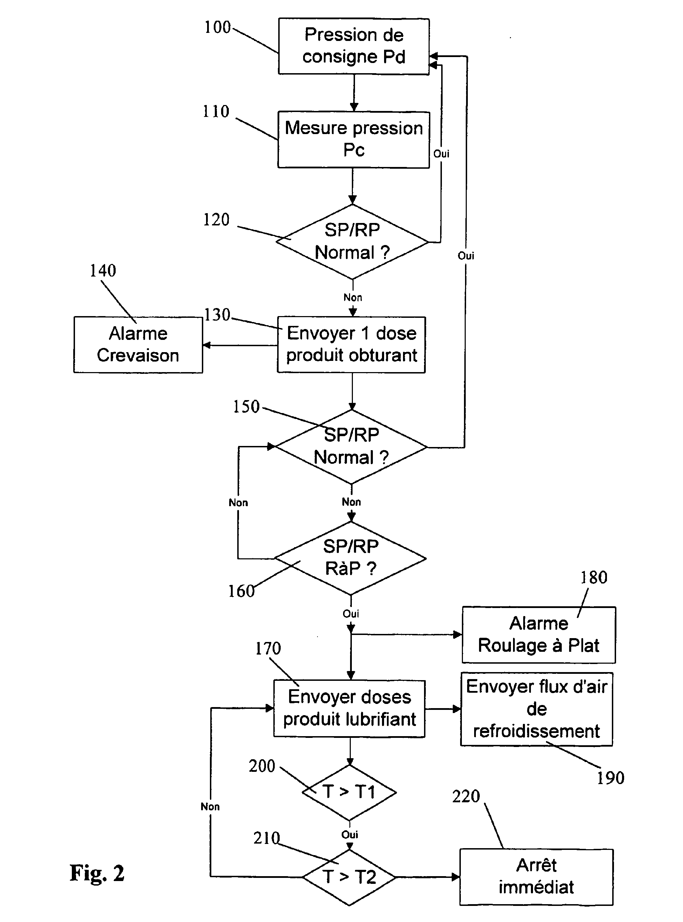

La figure 2 illustre le fonctionnement du dispositif selon l'invention.

A l'étape 100, le dispositif est en fonctionnement normal et régule la pression de gonflage de la cavité interne du pneumatique 1 à une valeur proche d'une valeur Pd donnée. A cet effet, périodiquement l'unité centrale 22 déclenche automatiquement un contrôle de la pression de gonflage du pneumatique 1 - étape 110. Puis on effectue la comparaison entre le signal de pression SP mesuré et le référentiel de pression RP de la mémoire de l'unité centrale 22 (étape 120). Si lors de l'un de ces contrôles, la pression mesurée Pc est inférieure d'une quantité supérieure à un seuil a donné, de l'ordre de 0,3 bars, ou si on constate un diminution de la pression de gonflage d'un pneumatique supérieure à un seuil α préenregistré dans le référentiel inclus dans la mémoire de l'unité centrale, le signal de pression SP est considéré comme anormal. On peut aussi utiliser comme test de la présence d'une fuite dans un pneumatique la comparaison de la variation de la pression dans le temps entre deux pneumatiques d'un même essieu comme décrit dans le brevet US 5,895,846. Dans le cas contraire, le cycle usuel de contrôle et de régulation se poursuit.

Dès qu'une fuite est détectée en liaison avec un signal de pression anormal, l'unité centrale 22 déclenche l'envoi dans la cavité du pneumatique 1 d'une dose donnée de produit obturant présent dans le réservoir 50 en ouvrant le robinet 54 pendant une courte période (étape 130). Comme le réservoir est pressurisé à environ 6 bars, l'ouverture du robinet 54 va projeter dans le conduit 30 une quantité de produit obturant donnée, fonction de la durée de l'ouverture du robinet. Ensuite, l'unité centrale 22 va amener la pression dans ce conduit 30 à une valeur telle (de l'ordre de 4 bars par exemple) que l'ouverture du robinet 32 va entraîner l'apparition d'un flux d'air entre le compresseur, le dispositif de régulation 28 et la cavité interne du pneumatique. C'est ce flux d'air qui va propulser la dose de produit obturant à travers le robinet 32, le conduit 34, le joint tournant 36 et le conduit 38 et ainsi une grande partie de la dose envoyée atteint la cavité du pneumatique 1. Après avoir créé ce flux d'air pendant un temps suffisant pour que la dose de produit obturant soit pratiquement complètement amenée dans la cavité interne, on contrôle la pression résultant dans cette cavité interne et, si nécessaire, on ajuste, vers le bas ou vers le haut, la pression interne. Ce produit actif, obturant, est efficace pour combler des trous de taille réduite dans la paroi du pneumatique 1. En même temps, l'unité centrale 22 envoie un message « alarme crevaison » au tableau de commande pour avertir le conducteur du véhicule de l'incident. On contrôle alors périodiquement la valeur de la pression de gonflage Pc dans le pneumatique 1 pour déterminer si le signal de pression reste anormal ou non (étape 150) et s'il reste anormal on contrôle aussi relativement à des conditions de roulage à plat (RàP) (étape 160). De telles conditions correspondent par exemple à des pressions très basses proches de 0,3 bars dans la cavité interne du pneumatique. Si la pression Pc remonte jusqu'à être égale ou proche de Pd, cette stratégie de réparation est arrêtée et le fonctionnement normal du CTIS reprend à l'étape 100. Si, en revanche, la pression Pc continue à diminuer tout en restant supérieure au seuil RàP, soit supérieure à 0,3 bars, on envoie à nouveau une ou plusieurs doses complémentaires de produit obturant. Pendant ce temps, on maintient une alarme du conducteur avec des restrictions d'usage du véhicule (vitesse...) adaptées.

Lorsque le résultat de l'étape 160 indique que la pression de gonflage devient très faible et inférieure à un second seuil de RàP de l'ordre de 0,3 bars, cela indique que la stratégie de réparation a échoué et qu'un roulage à plat va intervenir prochainement. L'unité centrale 22 déclenche alors périodiquement l'envoi dans la cavité du pneumatique 1 de doses d'un second produit actif présent dans le réservoir 52, un produit lubrifiant (étape 170). Ce produit a pour objectif de diminuer le frottement des parois du flanc du pneumatique sur le crochet de jante et permet d'augmenter sensiblement la distance parcourue dans ces conditions avant la destruction du pneumatique. Parallèlement, on avertit le conducteur du véhicule de l'imminence du roulage à plat et on lui donne les recommandations adaptées en terme de vitesse et de distance maximales envisageables (étape 180). On envoie aussi avantageusement un flux d'air pour limiter l'échauffement dans la cavité du pneumatique 1 dû aux frottements (étape 190). Ce flux d'air a aussi l'avantage de maintenir dans la cavité du pneumatique une pression différentielle minimale, souvent de l'ordre de 0,1 bar, par exemple. Cet effet de refroidissement ainsi que cette pression minimale sont dans les faits tout à fait notables pour la durée de vie du pneumatique et/ou de l'appui de sécurité en cas de roulage à plat.

Lorsque le système est aussi équipé de moyens permettant de mesurer et de suivre la température de l'air dans la cavité interne du pneumatique, il est avantageux de piloter l'envoi des doses de lubrifiant en fonction de cette température mesurée (étapes 200, 210). Lorsque l'on constate que cette température T dépasse un premier seuil par exemple de 80 degrés Celsius, on envoie une dose. Enfin, lorsque la température dépasse un second seuil supérieur à 100 degrés Celsius, cela veut dire qu'un arrêt immédiat du véhicule est maintenant obligatoire et on l'indique au conducteur (étape 220).

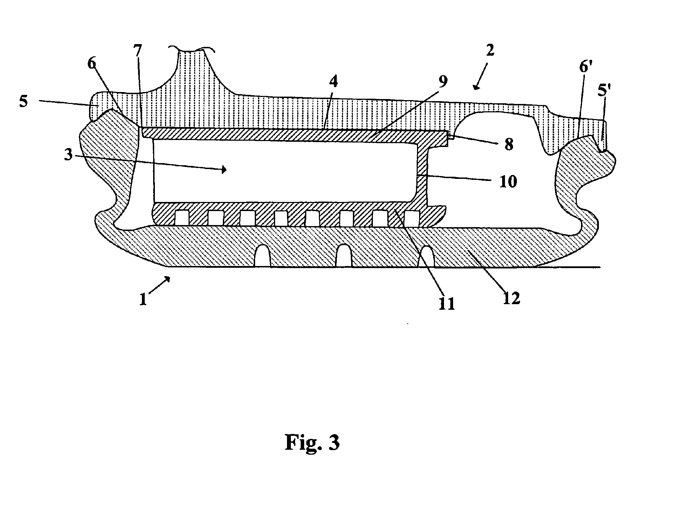

On voit à la figure 3 un ensemble monté comportant un pneumatique 1, une jante 2 de roue et un appui de sécurité 3 disposé autour de la portée 4 de la jante 2. La géométrie particulière de cette jante 2 de roue est notamment décrite dans le brevet US 5 634 993. Elle présente deux rebords de jante, 5 extérieur et 5' intérieur, deux sièges de bourrelets, 6 extérieur et 6' intérieur, de diamètres différents et une portée 4 avec un bord d'engagement 7 et une butée de blocage 8. Cette jante est particulièrement adaptée pour la mise en place aisée de cet appui de sécurité 3. Cet ensemble permet le roulage malgré une baisse de pression importante dans le pneumatique 1. L'appui comprend deux parties principales, une base 9 destinée à venir entourer la portée 4 de la jante 2 et un corps 10 relié à la base 9. Le corps 10 comprend un sommet 11 destiné à venir en contact avec la bande de roulement 12 du pneumatique 1 en cas de pression de gonflage nulle ou très faible - c'est ce qui est représenté à la figure 3. Le corps 10 peut être de formes extrêmement variées.

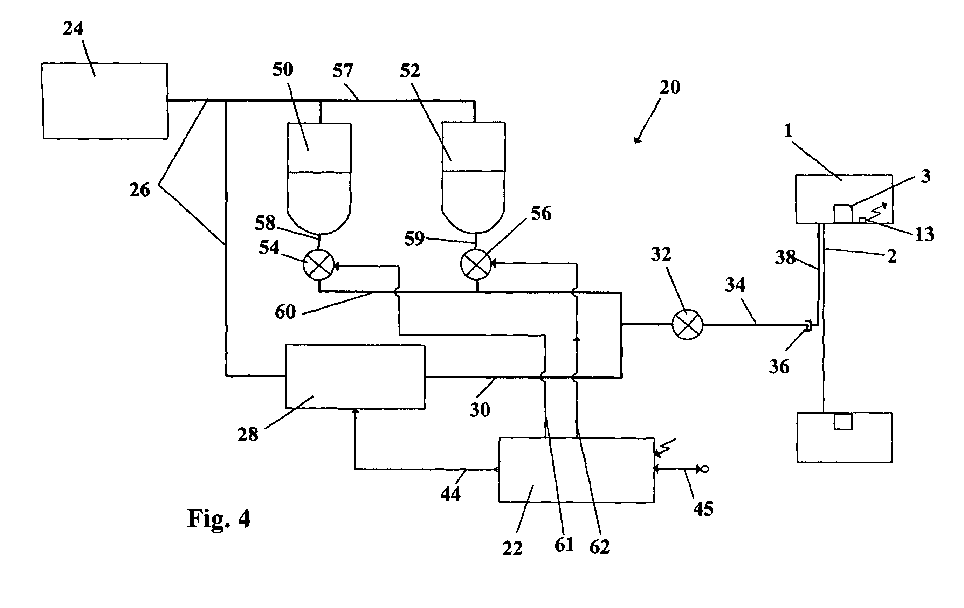

La figure 4 présente un dispositif 70 similaire à celui de la figure 1 mais adapté pour fonctionner avec des ensembles montés tels que représenté à la figure 3 ; l'ensemble monté est très schématiquement représenté avec le pneumatique 1 et la roue 2 ; à l'intérieur de la cavité interne du pneumatique 1 se trouve un appui 3 ainsi qu'un module de roue 13 ; ce module de roue comporte usuellement un capteur de pression et un capteur de température destinés à mesurer la pression et la température dans la cavité interne du pneumatique ainsi que des moyens pour transmettre, par exemple par radio, les données mesurées à l'unité centrale de pilotage 22.

La présence du module de roue 13 dans la cavité interne du pneumatique 1 permet de suivre de façon beaucoup plus régulière l'évolution de la pression de gonflage et de la température dans cette cavité. La présence de l'appui de sécurité 3 dans la cavité du pneumatique 1 permet de garantir au conducteur du véhicule une capacité de roulage à plat beaucoup plus importante de l'ordre de plusieurs centaines de kilomètres dans des conditions de vitesse et de charge appropriées au lieu de quelques centaines de mètres ou quelques kilomètres avec des pneus standards.

Des essais ont été réalisés qui montrent l'intérêt du dispositif et du procédé selon l'invention.

Le premier essai concerne le traitement de pertes de pression de gonflage dues à des crevaisons.

Les conditions de cet essai ont été les suivantes :

- véhicule : RENAULT Scénic 1.9 dTi ;
- pneumatique : PAX 195-620 R 420 Spacity ;
- appui : 115 (largeur)-420 (diamètre) 45 (hauteur) réalisé en matériau caoutchouteux (dimensions en mm) ;
- roue : 185-420 en alliage d'aluminium ;
- produit obturant : composition telle que présentée dans le document US 5,295,525 dont la viscosité est adaptée pour pouvoir être propulsée à travers les conduits du dispositif ; et
- produit lubrifiant : composition similaire à celles du document WO 02/04237 à base de glycérine, eau, polysaccharide (gomme xanthane) et un agent tensioactif tel que l'alkyl aryle sulfonate de sodium.

Le tableau 1 présente les résultats obtenus lors de crevaisons simulés.

Le premier type de crevaison correspond à une crevaison lente. Dans ce cas, le regonflage permet de compenser seul une telle fuite. On a constaté que ce type de crevaison intervient dans 40 % des crevaisons observées.

Le deuxième type de crevaison à une crevaison lente qui est compensée par regonflage jusqu'à l'éjection de l'objet ayant causé la crevaison. Cette éjection entraîne une augmentation marquée de la taille de l'ouverture et ainsi du débit de fuite d'air. Le dispositif selon l'invention permet alors d'envoyer une ou plusieurs doses de produit obturant et on constate que dans 30 % des cas, l'obturation du trou permet de retrouver l'étanchéité du pneumatique et ainsi de poursuivre normalement le voyage prévu.

Ce n'est que dans 10 % des cas (type n° 3) qu'après l'éjection de l'objet cause de la crevaison l'envoi de doses de produit obturant ne permet pas de retrouver l'étanchéité du pneumatique et qu'il est alors inévitable de se retrouver en situation de roulage à plat si l'on continue le roulage.

Tableau 1

| Type | Description | % des cas |
|---|---|---|
| 1 | Crevaisons lentes compensées par regonflage | 40 % |
| 2 | Crevaisons lentes compensées par regonflage jusqu'à éjection de l'objet de la crevaison. A l'éjection, le produit obturant permet de retrouver l'étanchéité de l'enveloppe. | 30 % |
| 3 | Crevaisons lentes compensées par regonflage jusqu'à l'éjection de l'objet de la crevaison. A l'éjection, le produit obturant ne permet pas de retrouver l'étanchéité de l'enveloppe. Seul le roulage à plat permet la poursuite du roulage. | 10 % |
| 4 | Crevaisons lentes non-compensées par regonflage. L'obturation permet la poursuite du roulage. | 10 % |
| 5 | Crevaisons lentes non-compensées par regonflage. | 10 % |

(suite)

| Type | Description | % des cas |
|---|---|---|
|  | Le produit obturant ne permet pas de retrouver l'étanchéité de l'enveloppe. Seul, le roulage à plat permet la poursuite du roulage. |  |

Dans le cas de crevaisons lentes mais non compensées par la stratégie de regonflage (20 % des cas de crevaisons), on constate que dans la moitié des cas l'envoi de produit obturant permet de retrouver l'étanchéité du pneumatique.

On constate ainsi que dans environ 80 % des types de crevaisons usuellement observées, le dispositif et le procédé de l'invention permettent par l'application successive des stratégies de compensation puis de réparation de maintenir ou de retrouver une pression de gonflage normale dans la cavité du pneumatique et ainsi de pouvoir poursuivre normalement le voyage prévu.

Dans 20 % des cas de crevaisons, ces deux stratégies ne permettent pas d'éviter d'arriver en situation de roulage à plat.

Un deuxième essai permet de montrer l'intérêt d'un lubrifiant en cas de roulage à plat. Cet essai s'est déroulé sans appui dans les conditions suivantes :

- Véhicule : PEUGEOT 405 ;
- Enveloppe : PAX185-590 R 400 ;
- Roue: 175-400 ;
- Lubrifiant : identique au précédent essai ;
- Quantité : 50 g ;
- Charge : 338 daN ;
- Position pneu à plat : ARG (arrière gauche) ;
- Pression résiduelle du pneu à plat : 0 b. (valve ôtée) ;
- Vitesse : 40 km/h.

Sans lubrifiant, l'autonomie obtenue dans ces conditions jusqu'à destruction complète du pneumatique a été de 4.5 km ; en revanche, en présence de lubrifiant, cette autonomie a été portée à 50 km.

Enfin, les essais suivants ont été réalisés en roulage à plat avec appui, dans les conditions suivantes :

- véhicule : RENAULT Scénic 1.9 dTi ;
- pneumatique : PAX 195-620 R 420 Spacity ;
- appui : 115-420 (45) (en matériau caoutchouteux) ;
- roue : 185-420 (alliage d'aluminium) ;
- produit obturant : identique au précédent essai ;
- lubrifiant : identique au précédent essai ;
- charge : 425 daN ;
- position pneu à plat : avant droit ;
- pression résiduelle du pneu à plat : 0 bar (valve ôtée) ;
- circuit : autoroutier, vitesse constante 100 km/h ; et
- température extérieure : 20 °C.

Tableau 2

| Description | Système avec lubrification interne | Système avec lubrification externe |
|---|---|---|
| Quantité de lubrifiant interne (disposé sur le sommet de l'enveloppe au montage). | 20 g. | 0 g. |
| Quantité de lubrifiant externe (dans le réservoir de lubrifiant) | 0 g. | 100 g. |
| Quantité de lubrifiant dans l'enveloppe en début de roulage à plat | 20 g. | 75 g. (1) |

(suite)

| Description | Système avec lubrification <u>interne</u> | Système avec lubrification <u>externe</u> |
|---|---|---|
| Autonomie en roulage à plat | 275 km | 430 km |
| (1) Une partie du lubrifiant n'a pas été emmenée par la pression et est restée dans les tuyaux ou cavité du CTIS. | | |

Cet essai compare un roulage à plat sur appui avec lubrifiant disposé dans la cavité interne du pneumatique ou apporté par un dispositif selon l'invention.

La distance parcourue avec le lubrifiant introduit dans la cavité interne du pneumatique par un dispositif selon l'invention est de 430 km au lieu de 275 km dans l'autre cas. Ce résultat montre l'intérêt de pouvoir augmenter à la demande la quantité de produit lubrifiant pour pouvoir augmenter sensiblement la durée de vie en roulage à plat du système.

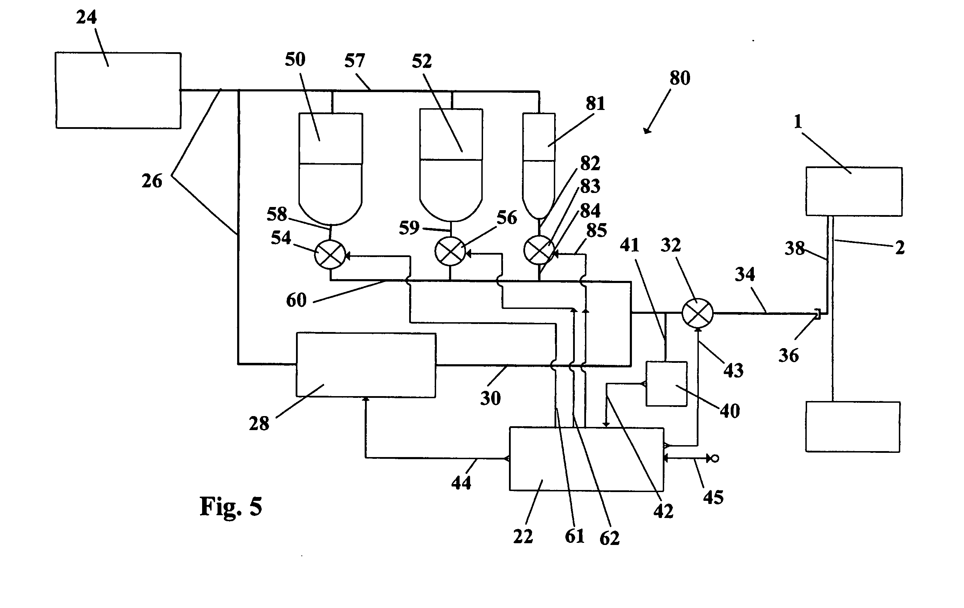

La figure 5 présente un dispositif 80 selon l'invention similaire à celui de la figure 1 mais complété d'un réservoir 81 contenant un produit actif complémentaire destiné par exemple à nettoyer les canalisations après l'envoi de doses de produit lubrifiant ou obturant. Ce réservoir 81 est relié comme précédemment au compresseur 24 par le conduit 57 et au conduit 30 par le conduit 82, le robinet 83 et le conduit 84. Le robinet 84 est relié et commandé par l'unité centrale de pilotage 22 au moyen du conducteur 85.

Les principaux avantages du dispositif selon l'invention sont les suivants :

- la plupart des crevaisons sont soit compensées, soit réparées ; l'intervention chez le garagiste n'est dans certains cas plus nécessaire d'où un gain de temps et une économie ;
- le pneumatique est monté sans lubrifiant interne : les opérations de montage sont ainsi simplifiée, cela en réduit aussi le coût ;
- en cas de roulage à plat, la quantité de lubrifiant peut être significativement augmentée et donc l'autonomie améliorée ; et
- le démontage d'un pneumatique n'ayant pas roulé à plat s'effectue en absence de lubrifiant.


## Revendications

1. Dispositif centralisé de traitement des phénomènes de perte de pression et de roulage à plat d'un pneumatique d'un véhicule, comprenant des moyens externes à l'ensemble monté, lesdits moyens externes étant solidaires en permanence du véhicule et aptes à injecter ou autrement amener dans la cavité interne du pneumatique au moins un produit actif, également externe à l'ensemble monté, **caractérisé en ce que** ledit produit actif est choisi dans les groupes des produits obturants ou des produits lubrifiants et est apte à traiter les phénomènes de perte de pression et de façon ultime de roulage à plat.

2. Dispositif selon la revendication 1, dans lequel lesdits moyens externes comprennent de plus des moyens aptes à injecter ou autrement amener un additif adapté, également externe à l'ensemble monté.

3. Dispositif selon la revendication 2, dans lequel ledit additif adapté est choisi parmi les agents capables de, ou adaptés pour, améliorer les conditions d'injection des produits actifs, l'action de ces produits actifs et les conditions de traitement de la perte de pression et de façon ultime du roulage à plat.

4. Dispositif selon l'une des revendications 2 et 3, dans lequel ledit additif adapté est un agent de nettoyage ou anti corrosion ou refroidisseur.

5. Dispositif selon l'une des revendications 1 à 4, dans lequel lesdits moyens externes comportent à l'extérieur de l'ensemble monté au moins un réservoir ou une source de produit actif destiné à être injecté ou autrement amené dans la cavité interne du pneumatique en cas de perte de pression ou de roulage à plat.

6. Dispositif selon l'une quelconque des revendications 1 à 5, dans lequel lesdits moyens externes comprennent en plus des moyens pour amener ou injecter au moins ledit produit actif dans la cavité interne du pneumatique en cas de perte de pression ou de roulage à plat.

7. Dispositif selon l'une quelconque des revendications 1 à 6, dans lequel lesdits moyens pour amener ou injecter au moins un produit actif comprennent la mise en oeuvre d'air ou autre gaz approprié, inerte, comme l'azote ou un hydrocarbure non toxique et non dommageable pour l'environnement, et non inflammable, à l'état comprimé.

8. Dispositif selon l'une quelconque des revendications 1 à 7, dans lequel lesdits moyens externes comportent une réserve ou source de produit refroidisseur destiné à être injecté ou autrement amené dans la cavité interne du pneumatique en cas de roulage à plat.

9. Dispositif selon la revendication 8, dans lequel ledit produit refroidisseur est de l'air, de l'azote, ou un gaz équivalent.

10. Dispositif selon l'une quelconque des revendications 1 à 9, dans lequel lesdits moyens externes comprennent ou coopèrent avec :

   - des moyens de mesure de la pression ou d'autres caractéristiques représentatives de l'air interne du pneumatique, générant au moins un « signal représentatif » de l'état de l'air de gonflage dans la cavité interne du pneumatique, c'est-à-dire de la pression et/ou des variations de ladite pression dans le temps (ci-après « signal de pression ») ;
   - des moyens de pilotage desdits moyens d'amenée ou d'injection comportant au moins une mémoire, un comparateur et un programme de pilotage, adaptés pour :

      • recevoir et traiter ledit signal de pression ;
      • le comparer à un référentiel de pression chargé dans ladite mémoire ; et
      • décider de, et programmer, en fonction du résultat de ladite comparaison, l'amenée ou l'injection dans le pneumatique d'air ou autre gaz comprimé et/ou de produit actif, selon des combinaisons variables de quantités, proportions et débits ou doses, adaptées pour répondre au mieux, en fonction dudit programme et de ladite mémoire, au signal de pression reçu.

11. Dispositif selon la revendication 10, dans lequel ledit référentiel de pression comporte des indications en valeur de pression, de différence de pression par rapport à une pression de référence, notamment la pression de service, et de vitesse de variation de la pression, c'est-à-dire $\dfrac{\Delta p}{\Delta t}$.

12. Dispositif selon la revendication 10 ou 11, dans lequel les moyens de mesure des caractéristiques de l'air interne du pneumatique, générant le signal de pression, se trouvent sur ou dans l'ensemble monté.

13. Dispositif selon la revendication 10 ou 11, dans lequel lesdits moyens de mesure des caractéristiques de l'air interne du pneumatique, générant ledit signal de pression, se trouvent à l'extérieur de l'ensemble monté.

14. Dispositif selon l'une quelconque des revendications 10 à 13, dans lequel lesdits moyens pour générer le signal de pression incorporent des moyens de mesure de la température de l'air de la cavité interne du pneumatique et de son évolution dans le temps.

15. Dispositif selon l'une quelconque des revendications 1 à 14, dans lequel lesdits moyens pour amener ou injecter au moins un produit actif comprennent un générateur ou source d'air ou autre gaz comprimé et des conduits et leurs vannes ou robinets formant un circuit de liaison entre ledit générateur ou source, lesdits réservoirs et l'intérieur de la cavité interne dudit pneumatique .

16. Dispositif selon la revendication 15, dans lequel ledit générateur ou source d'air comprimé consiste en un réservoir d'air comprimé comme l'air atmosphérique ou un gaz inerte comme l'azote, ou un hydrocarbure non toxique, non inflammable et non dommageable pour l'environnement.

17. Dispositif selon la revendication 15, dans lequel ledit générateur d'air comprimé consiste en un compresseur.

18. Dispositif selon la revendication 17, dans lequel ledit compresseur fournissant l'air de gonflage est adapté pour fournir également l'air de refroidissement.

19. Dispositif selon l'une quelconque des revendications 1 à 18, comprenant un système centralisé de gonflage d'au moins un pneumatique d'un véhicule ou CTIS constitué essentiellement de :

- une unité centrale de pilotage ;
- un compresseur produisant de l'air ou gaz comprimé ;
- un dispositif de régulation de la pression à une valeur fixe, ou pilotée par l'unité centrale ; et
- des moyens de connexion pneumatique entre ledit compresseur, ledit dispositif de régulation de la pression et la cavité interne dudit pneumatique ;

dans lequel ledit dispositif comporte en plus au moins un réservoir de produit actif relié par des conduits et robinets ou vannes audit éléments du CTIS et dans lequel l'unité centrale comporte une mémoire et un programme adaptés pour gérer et mettre en oeuvre des combinaisons variables de quantités, proportions et débits ou doses d'air de gonflage, de produit actif et/ou d'additif adapté, notamment de produit obturant et/ou lubrifiant et/ou d'additifs adaptés comme des agents de nettoyage, anti-corrosion, de l'air (ou un gaz) de refroidissement, ou un fluide de refroidissement comme de l'eau ou un alcool ou produits analogues.

**20.** Procédé de traitement centralisé des phénomènes de perte de pression et de roulage à plat d'un pneumatique d'un véhicule, **caractérisé en ce qu'**il met en oeuvre:

- des moyens de mesure de la pression ou d'autres caractéristiques représentatives de l'air interne du pneumatique, générant au moins un « signal représentatif » de l'état de l'air de gonflage dans la cavité interne du pneumatique, c'est-à-dire de la pression et/ou des variations de ladite pression dans le temps (ci-après « signal de pression »);
- éventuellement des moyens de mesure de la température interne de l'air dans le pneumatique ;
- des moyens d'amenée ou d'injection dans la cavité interne d'un pneumatique d'air ou autre gaz comprimé et d'au moins un produit actif ;
- des moyens de pilotage desdits moyens d'amenée ou d'injection comportant au moins une mémoire, un comparateur et un programme de pilotage, adaptés pour :

  - recevoir et traiter ledit signal de pression ;
  - le comparer à un référentiel de pression chargé dans ladite mémoire ; et
  - ledit programme permettant de décider de, et programmer, en fonction du résultat de ladite comparaison, l'amenée ou l'injection dans le pneumatique d'air ou autre gaz comprimé, de produit actif et/ou d'additif adapté, selon des combinaisons variables de quantités, proportions et débits ou doses, adaptées pour répondre au mieux, en fonction dudit programme et de ladite mémoire, au signal de pression reçu.

**21.** Procédé selon la revendication 20, dans lequel ledit référentiel de pression comporte des indications en valeur de pression, de différence de pression par rapport à une pression de référence, notamment la pression de service, et de vitesse de variation de la pression, c'est-à-dire $\dfrac{\Delta p}{\Delta t}$.

**22.** Procédé selon la revendication 20 ou 21, dans lequel, lorsque le résultat de la comparaison entre ledit signal de pression (SP) et ledit référentiel de pression (RP) est anormal, les moyens de pilotage font envoyer par les moyens d'amener ou d'injection une dose prédéterminée de produit actif obturant dans la cavité interne dudit pneumatique.

**23.** Procédé selon la revendication 22, dans lequel les moyens de pilotage transmettent en plus une « alarme crevaison » au conducteur.

**24.** Procédé selon l'une des revendications 22 et 23, dans lequel le résultat de la comparaison entre ledit signal de pression (SP) et ledit référentiel de pression (RP) est anormal lorsque l'écart entre la pression mesurée et la pression de consigne est supérieur à un seuil donné.

**25.** Procédé selon l'une des revendications 22 et 23, dans lequel le résultat de la comparaison entre ledit signal de pression (SP) et ledit référentiel de pression (RP) est anormal lorsque la variation de pression mesurée pendant un temps donné est supérieure à un seuil donné.

**26.** Procédé selon l'une des revendications 20 à 25, dans lequel, lorsque le résultat de la comparaison entre ledit signal de pression (SP) et ledit référentiel de pression (RP) indique des conditions de roulage à plat (RàP), les moyens de pilotage font envoyer par les moyens d'amener ou d'injection une dose prédéterminée de produit actif lubrifiant dans la cavité interne dudit pneumatique.

27. Procédé selon la revendication 26, dans lequel les moyens de pilotage transmettent en plus une « alarme roulage à plat » au conducteur.

28. Procédé selon l'une des revendications 26 ou 27, dans lequel, les moyens de pilotage font envoyer en plus par les moyens d'amener ou d'injection un faible débit d'air ou autre gaz de refroidissement dans la cavité interne dudit pneumatique.

29. Procédé selon l'une des revendications 26 à 28, dans lequel des moyens de mesure de la température de l'air dans la cavité interne du pneumatique transmettent ladite température aux moyens de pilotage et si, compte tenu des conditions d'usage (charge, vitesse, température extérieure...), lesdits moyens de pilotage constatent que cette valeur de température est supérieure à un seuil prédéterminé, alors lesdits moyens font envoyer une ou plusieurs doses supplémentaires de lubrifiant.

30. Procédé selon la revendication 29, dans lequel, lorsque les moyens de pilotage constatent que la valeur de la température dans la cavité interne du pneumatique est supérieure à un second seuil prédéterminé, ils font transmettre au conducteur du véhicule une alarme demandant un arrêt immédiat.

## Claims

1. Centralised device for dealing with phenomena of pressure loss and running flat with a vehicle tyre, comprising means external to the mounted assembly, the said external means being permanently fixed to the vehicle and able to inject or otherwise bring into the internal cavity of the tyre at least one active product, also external to the mounted assembly, chosen from the groups of sealing products or lubricating products and able to deal with the phenomena of loss of pressure and ultimately running flat.

2. Device according to Claim 1, in which the said external means also comprise means able to inject or otherwise bring an adapted additive, also external to the mounted assembly.

3. Device according to Claim 2, in which the said adapted additive is chosen from amongst the agents capable of, or adapted for, improving the conditions of injection of the active products, the action of these active products and the conditions of dealing with the pressure loss and ultimately running flat.

4. Device according to one of Claims 2 and 3, in which the said adapted additive is a cleaning or anti-corrosion or cooling agent.

5. Device according to one of Claims 1 to 4, in which the said external means comprise, outside the mounted assembly, at least one reservoir or a source of a active product intended to be injected or otherwise brought into the internal cavity of the tyre in the event of pressure loss or running flat.

6. Device according to any one of Claims 1 to 5, in which the said external means also comprise means for bringing or injecting at least the said active product into the internal cavity of the tyre in the event of pressure loss or running flat.

7. Device according to any one of Claims 1 to 6, in which the said means for bringing or injecting at least one active product comprise the use of air or other appropriate inert gas, such as nitrogen or a non-toxic hydrocarbon which is not detrimental to the environment, and non-flammable, in the compressed state.

8. Device according to any one of Claims 1 to 7, in which the said external means comprise a reserve or source of cooling product intended to be injected or otherwise brought into the internal cavity of the tyre in the event of running flat.

9. Device according to Claim 8, in which the said cooling product is air, nitrogen or an equivalent gas.

10. Device according to any one of Claims 1 to 9, in which the said external means comprise or cooperate with:

    - means of measuring the pressure or other characteristics representative of the internal air of the tyre, generating at least one "representative signal" on the state of the inflation air in the internal cavity of the tyre, that is to say of the pressure and/or of the variations in the said pressure over time (hereinafter referred to as the "pressure signal");
- means of controlling the said feed or injection means comprising at least a memory, a comparator and a control program, adapted to:

  • receive and process the said pressure signal;
  • compare it with a pressure reference loaded in the said memory; and
  • decide on, and program, according to the result of the said comparison, the feeding or injection into the tyre of air or other compressed gas and/or active product, according to variable combinations of quantities, proportions and rates or doses, adapted best to respond, according to the said program and the said memory, to the pressure signal received.

11. Device according to Claim 10 in which the said pressure reference comprises information in terms of pressure value, difference in pressure with respect to a reference pressure, in particular the service pressure, and rate of pressure variation, that is to say $\dfrac{\Delta p}{\Delta t}$.

12. Device according to Claim 10 or 11, in which the means of measuring the characteristics of the internal air of the tyre, generating the pressure signal, are situated on or in the mounted assembly.

13. Device according to Claim 10 or 11, in which the means of measuring the characteristics of the internal air in the tyre, generating the pressure signal, are situated outside the mounted assembly.

14. Device according to any one of Claims 10 to 13, in which the said means for generating the pressure signal incorporate means of measuring the temperature of the air in the internal cavity of the tyre and its change over time.

15. Device according to any one of Claims 1 to 14, in which the said means for bringing or injecting at least one active product comprise a generator or source of air or other compressed gas and pipes and their valves or cocks forming a connection circuit between the said generator or source, the said reservoirs and the interior of the internal cavity of the said tyre.

16. Device according to Claim 15, in which the said generator or source of compressed air consists of a reservoir of compressed air such as atmospheric air or an inert gas such as nitrogen, or a non-toxic, non-flammable hydrocarbon which is not detrimental to the environment.

17. Device according to Claim 15, in which the said compressed air generator consists of a compressor.

18. Device according to Claim 17, in which the said compressor supplying the inflation air is adapted also to supply the cooling air.

19. Device according to any one of Claims 1 to 18, comprising a centralised system for inflating at least one tyre on a vehicle or CTIS consisting essentially of:

  - a central control unit;
  - a compressor producing compressed air or gas;
  - a device for regulating the pressure at a fixed value, or controlled by the central unit; and
  - means of pneumatic connection between the said compressor, the said pressure regulation device and the internal cavity of the said tyre;

in which the said device also comprises at least one active product reservoir connected by pipes and cocks or valves to the said components of the CTIS and in which the central unit comprises a memory and a program both adapted to manage and implement variable combinations of quantities, proportions and rates or doses of inflation air, active product and/or adapted additive, in particular sealing product and/or lubricant and/or adapted additives such as cleaning or anti-corrosion agents, cooling air (or gas), or a cooling fluid such as water or an alcohol or similar products.

20. Centralised method for dealing with phenomena of loss of pressure and running flat with a tyre on a vehicle, **characterised in that** it uses:

EP 1 490 239 B1

- means of measuring the pressure or other characteristics representative of the internal air of the tyre, generating at least one "representative signal" on the state of the inflation air in the internal cavity of the tyre, that is to say the pressure and/or variations in the said pressure over time (hereinafter referred to as the "pressure signal);
- possibly means of measuring the internal temperature of the air in the tyre;
- means of feeding or injecting air or other compressed gas and at least one active product into the internal cavity of a tyre;
- means of controlling the said feed or injection means comprising at least a memory, a comparator and a control program, adapted for:

- receiving and processing the said pressure signal;
- comparing it with a pressure reference (PR) loaded in the said memory; and
- the said program making it possible to decide on, and program, according to the result of the said comparison, the feeding or injection of air or other compressed gas, active product and/or adapted additive into the tyre, according to variable combinations of quantities, proportions and flow rates or doses, adapted to best respond, according to the said program and the said memory, to the pressure signal received.

21. Method according to Claim 20, in which the said pressure reference comprises information in terms of pressure value, difference in pressure with respect to a reference pressure, in particular the service pressure, and rate of pressure variation, that is to say $\dfrac{\Delta p}{\Delta t}$.

22. Method according to Claim 20 or 21, in which, when the result of the comparison between the said pressure signal (PS) and the said pressure reference (PR) is abnormal, the control means have the feed or injection means send a predetermined dose of active sealing product into the internal cavity of the said tyre.

23. Method according to Claim 22, in which the control means also transmit a "puncture alarm" to the driver.

24. Method according to one of Claims 22 and 23, in which the result of the comparison between the said pressure signal (PS) and the said pressure reference (PR) is abnormal when the difference between the measured pressure and the set pressure is greater than a given threshold.

25. Method according to one of Claims 22 and 23, in which the result of the comparison between the said pressure signal (PS) and the said pressure reference (PR) is abnormal when the variation in pressure measured over a given time is greater than a given threshold.

26. Method according to one of Claims 20 to 25, in which, when the result of the comparison between the said pressure signal (PS) and the said pressure reference (PR) indicates flat-running (FR) conditions, the control means have the supply or injection means send a predetermined dose of active lubricating product into the internal cavity of the said tyre.

27. Method according to Claim 26, in which the control means also transmit a "flat-running alarm" to the driver.

28. Method according to one of Claims 26 or 27, in which the control means also have the supply or injection means send a small flow of air or other cooling gas into the internal cavity of the said tyre.

29. Method according to one of Claims 26 to 28, in which means of measuring the temperature of the air in the internal cavity of the tyre transmit the said temperature to the control means and if, having regard to the conditions of use (load, speed, external temperature etc), the said control means find that this temperature value is higher than a predetermined threshold, then the said means have one or more additional doses of lubricant sent.

30. Method according to Claim 29, in which, when the control means find that the value of the temperature in the internal cavity of the tyre is greater than a second predetermined threshold, they have an alarm requesting immediate stoppage transmitted to the driver of the vehicle.

**Patentansprüche**

1. Zentralisierte Vorrichtung zum Behandeln von Druckverlust- und Pannenlauf-Phänomenen an einem Fahrzeugreifen mit Mitteln außerhalb der montierten Einheit, die permanent mit dem Fahrzeug verbunden und dazu geeignet sind, mindestens einen ebenfalls außerhalb der montierten Einheit befindlichen Wirkstoff in die innere Aushöhlung des Reifens einzuspritzen oder auf andere Weise zuzuführen, **dadurch gekennzeichnet, dass** der Wirkstoff aus den Gruppen der Abdicht- oder Schmiermittel ausgewählt und zur Behandlung von Druckverlust- und schließlich Pannenlauf-Phänomenen geeignet ist.

2. Vorrichtung nach Anspruch 1, bei der die externen Mittel außerdem Mittel zum Einspritzen oder anderweitigem Zuführen eines geeigneten Zusatzstoffes aufweisen, der sich ebenfalls außerhalb der montierten Einheit befindet.

3. Vorrichtung nach Anspruch 2, bei der der Zusatzstoff unter den Mitteln ausgewählt ist, die in der Lage oder geeignet sind, die Bedingungen des Einspritzens der Wirkstoffe, die Wirkung der Wirkstoffe und die Bedingungen der Behandlung des Druckverlusts und schließlich des Pannenlaufs zu verbessern.

4. Vorrichtung nach einem der Ansprüche 2 oder 3, bei der der Zusatzstoff ein Reinigungs-, Korrosionsschutz- oder Kühlmittel ist.

5. Vorrichtung nach einem der Ansprüche 1 bis 4, bei der die externen Mittel außerhalb der montierten Einheit mindestens einen Behälter oder eine Quelle eines Wirkstoffs aufweisen, der bei Druckverlust oder Pannenlauf in die innere Aushöhlung des Reifens gespritzt oder auf andere Weise zugeführt wird.

6. Vorrichtung nach einem der Ansprüche 1 bis 5, bei der die externen Mittel außerdem Mittel zum Zuführen oder Einspritzen mindestens des Wirkstoffs in die innere Aushöhlung des Reifens bei Druckverlust oder Pannenlauf aufweisen.

7. Vorrichtung nach einem der Ansprüche 1 bis 6, bei der die Mittel zum Zuführen oder Einspritzen mindestens eines Wirkstoffs Luft oder ein inertes Gas wie Stickstoff oder einen nicht toxischen, nicht umweltschädlichen und nicht entflammbaren Kohlenwasserstoff im komprimierten Zustand einsetzen.

8. Vorrichtung nach einem der Ansprüche 1 bis 7, bei der die externen Mittel eine Reserve oder Quelle eines kühlenden Produkts aufweisen, das beim Pannenlauf in die innere Aushöhlung des Reifens eingespritzt oder auf andere Weise zugeführt wird.

9. Vorrichtung nach Anspruch 8, bei der das kühlende Produkt Luft, Stickstoff oder ein gleichwertiges Gas ist.

10. Vorrichtung nach einem der Ansprüche 1 bis 9, bei dem die externen Mittel Folgendes aufweisen oder zusammenwirken mit:

    - Mitteln zum Messen des Drucks oder anderer für die Luft im Reifen charakteristischer Merkmale, die mindestens ein "charakteristisches Signal" für den Zustand der Luft in der inneren Aushöhlung des Reifens erzeugen, das heißt für den Druck und/oder die Änderungen des Drucks über die Zeit (nachfolgend "Drucksignal" genannt);
    - Mitteln zum Steuern der Zufuhr- oder Einspritzmittel mit mindestens einem Speicher, einem Vergleicher und einem Steuerprogramm, die geeignet sind,

      · das Drucksignal zu empfangen und zu verarbeiten;
      · es mit einem im Speicher geladenen Druck-Bezugssystem zu vergleichen; und
      · abhängig vom Ergebnis dieses Vergleichs über die Zufuhr oder das Einspritzen von Luft oder einem anderen komprimierten Gas und/oder Wirkstoff zu entscheiden und diese zu programmieren, und zwar in variablen Kombinationen von Mengen, Anteilen und Durchsätzen oder Dosen, die geeignet sind, abhängig vom Programm und vom Speicher bestmöglich auf das empfangene Drucksignal zu reagieren.

11. Vorrichtung nach Anspruch 10, bei der das Druck-Bezugssystem Wertangaben für den Druck, den Druckunterschied gegenüber einem Referenzdruck, insbesondere dem Betriebsdruck, und für die Änderungsgeschwindigkeit des Drucks, das heißt $\frac{\Delta p}{\Delta t}$, umfasst.

**12.** Vorrichtung nach Anspruch 10 oder 11, bei der sich die Mittel zum Messen der Merkmale der Luft im Reifen, die das Drucksignal erzeugen, an oder in der montierten Einheit befinden.

**13.** Vorrichtung nach Anspruch 10 oder 11, bei der sich die Mittel zum Messen der Merkmale der Luft im Reifen, die das Drucksignal erzeugen, außerhalb der montierten Einheit befinden.

**14.** Vorrichtung nach einem der Ansprüche 10 bis 13, bei der die Mittel zum Erzeugen des Drucksignals Mittel zum Messen der Temperatur der Luft der inneren Aushöhlung des Reifens und ihrer Entwicklung über die Zeit umfassen.

**15.** Vorrichtung nach einem der Ansprüche 1 bis 14, bei der die Mittel zum Zuführen oder Einspritzen mindestens eines Wirkstoffs einen Generator oder eine Quelle von Luft oder eines anderen komprimierten Gases sowie Leitungen und Ventile oder Hähne aufweisen, die eine Verbindungsleitung zwischen dem Generator oder der Quelle, den Behältern und der inneren Aushöhlung des Reifens bilden.

**16.** Vorrichtung nach Anspruch 15, bei der der Generator oder die Quelle von Druckluft aus einem Behälter für komprimierte Luft wie Umgebungsluft oder ein inertes Gas wie Stickstoff oder einen nicht toxischen, nicht entflammbaren und nicht umweltschädlichen Kohlenwasserstoff besteht.

**17.** Vorrichtung nach Anspruch 15, bei der der Generator von komprimierter Luft aus einem Kompressor besteht.

**18.** Vorrichtung nach Anspruch 17, bei der der Kompressor, der die Aufpumpluft liefert, auch die Kühlluft liefern kann.

**19.** Vorrichtung nach einem der Ansprüche 1 bis 18 mit einem zentralisierten System zum Aufpumpen von mindestens einem Fahrzeugreifen oder CTIS, das im Wesentlichen aus Folgendem besteht:

- einer zentralen Steuereinheit;
- einem Kompressor, der komprimierte Luft oder komprimiertes Gas erzeugt;
- einer Vorrichtung zum Regeln des Drucks auf einen festen oder von der zentralen Einheit gesteuerten Wert; und
- Mitteln zur pneumatischen Verbindung des Kompressors, der Druckregelvorrichtung und der inneren Aushöhlung des Reifens;

wobei die Vorrichtung außerdem mindestens einen Behälter für einen Wirkstoff aufweist, der über Leitungen und Hähne oder Ventile mit den Elementen des CTIS verbunden ist, und wobei die zentrale Einheit einen Speicher und ein Programm aufweist, die variable Kombinationen von Mengen, Anteilen und Durchsätzen oder Dosen von Aufpumpluft, Wirkstoff und/oder geeignetem Zusatzstoff, insbesondere von Abdicht- und/oder Schmiermittel und/oder geeigneten Zusatzstoffen wie Reinigungs-, Korrosionsschutzmitteln, Luft (oder ein Gas) zum Kühlen oder ein flüssiges Kühlmittel wie Wasser oder einen Alkohol oder ähnliche Produkte verwalten und einsetzen können.

**20.** Verfahren zum zentralisierten Behandeln von Druckverlust- und Pannenlauf-Phänomenen an einem Fahrzeugreifen, **dadurch gekennzeichnet, dass** es Folgendes einsetzt:

- Mittel zum Messen des Drucks oder anderer für die Luft im Reifen charakteristischer Merkmale, die mindestens ein "charakteristisches Signal" für den Zustand der Luft in der inneren Aushöhlung des Reifens erzeugen, das heißt für den Druck und/oder die Änderungen des Drucks über die Zeit (nachfolgend als "Drucksignal" bezeichnet);
- gegebenenfalls Mittel zum Messen der Temperatur der Luft im Reifen;
- Mittel zum Zuführen oder Einspritzen von Luft oder einem anderen komprimierten Gas und von mindestens einem Wirkstoff in die innere Aushöhlung eines Reifens;
- Mittel zum Steuern der Zufuhr- oder Einspritzmittel mit mindestens einem Speicher, einem Vergleicher und einem Steuerprogramm, die dazu geeignet sind:

- das Drucksignal zu empfangen und zu verarbeiten;
- es mit einem im Speicher geladenen Druck-Bezugssystem zu vergleichen;
- wobei es das Programm erlaubt, abhängig vom Ergebnis des Vergleichs über die Zufuhr oder das Einspritzen von Luft oder einem anderen komprimierten Gas, von Wirkstoff und/oder einem geeignetem Zusatzstoff in den Reifen zu entscheiden und diese zu programmieren, und zwar in variablen Kombinationen von Mengen, Anteilen und Durchsätzen oder Dosen, die geeignet sind, um abhängig vom Programm und vom Speicher bestmöglich auf das empfangene Drucksignal zu reagieren.

**21.** Verfahren nach Anspruch 20, bei dem das Druck-Bezugssystem Wertangaben für den Druck, den Druckunterschied gegenüber einem Referenzdruck, insbesondere dem Betriebsdruck, und für die Änderungsgeschwindigkeit des Drucks, das heißt $\frac{\Delta p}{\Delta t}$, umfasst.

**22.** Verfahren nach Anspruch 20 oder 21, bei dem die Steuermittel, wenn das Ergebnis des Vergleichs zwischen dem Drucksignal (SP) und dem Druck-Bezugssystem (RP) anormal ist, die Zufuhr- oder Einspritzmittel veranlassen, eine vorher festgelegte Dosis an abdichtendem Wirkstoff in die innere Aushöhlung des Reifens zu schicken.

**23.** Verfahren nach Anspruch 22, bei dem die Steuermittel außerdem einen "Pannenalarm" an den Fahrer übertragen.

**24.** Verfahren nach einem der Ansprüche 22 oder 23, bei dem das Ergebnis des Vergleichs zwischen dem Drucksignal (SP) und dem Druck-Bezugssystem (RP) anormal ist, wenn die Differenz zwischen dem gemessenen Druck und dem Einstelldruck einen gegebenen Grenzwert übersteigt.

**25.** Verfahren nach einem der Ansprüche 22 oder 23, bei dem das Ergebnis des Vergleichs zwischen dem Drucksignal (SP) und dem Druck-Bezugssystem (RP) anormal ist, wenn die über eine gegebene Zeit gemessene Druckänderung einen gegebenen Grenzwert übersteigt.

**26.** Verfahren nach einem der Ansprüche 20 bis 25, bei dem die Steuermittel, wenn das Ergebnis des Vergleichs zwischen dem Drucksignal (SP) und dem Druck-Bezugssystem (RP) auf Pannenlauf-Bedingungen (RäP) hinweist, die Zufuhr- oder Einspritzmittel veranlassen, eine vorher festgelegte Dosis an schmierendem Wirkstoff in die innere Aushöhlung des Reifens zu schicken.

**27.** Verfahren nach Anspruch 26, bei dem die Steuermittel außerdem einen "Pannenlauf-Alarm" an den Fahrer übertragen.

**28.** Verfahren nach einem der Ansprüche 26 oder 27, bei dem die Steuermittel die Zufuhr- oder Einspritzmittel veranlassen, außerdem eine kleine Menge Luft oder eines anderen Gases zum Kühlen in die innere Aushöhlung des Reifens zu schicken.

**29.** Verfahren nach einem der Ansprüche 26 bis 28, bei dem die Mittel zum Messen der Temperatur der Luft in der inneren Aushöhlung des Reifens diese Temperatur an die Steuermittel übermitteln, die, falls sie feststellen, dass unter Berücksichtigung der Nutzungsbedingungen (Last, Geschwindigkeit, Außentemperatur usw.) der Temperaturwert einen vorher festgelegten Grenzwert übersteigt, eine oder mehrere zusätzliche Dosen an Schmiermittel versenden lassen.

**30.** Verfahren nach Anspruch 29, bei dem die Steuermittel, wenn sie feststellen, dass der Wert der Temperatur in der inneren Aushöhlung des Reifens einen vorher festgelegten zweiten Grenzwert übersteigt, an den Fahrer des Fahrzeugs einen Alarm übertragen lassen, der zum sofortigen Anhalten auffordert.

Fig. 1

EP 1 490 239 B1

Fig. 2

**Fig. 3**

Fig. 4

Fig. 5

EP 1 490 239 B1